(19)

Europäisches
Patentamt
European
Patent Office
Office européen
des brevets

(11) **EP 2 343 400 A1**

(12) **EUROPEAN PATENT APPLICATION**

(43) Date of publication:
**13.07.2011 Bulletin 2011/28**

(51) Int Cl.:
***C23C 24/00*** (2006.01)　　　***C23C 24/08*** (2006.01)

(21) Application number: **10192346.4**

(22) Date of filing: **24.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.12.2009 GB 0922285**

(71) Applicant: **Rolls-Royce plc
London SW1E 6AT (GB)**

(72) Inventors:
• **Lambourne, Alexis
Belper, Derbyshire DE56 1BD (GB)**
• **Taylor, Alan
Huntingdon, Cambridgeshire PE28 3LP (GB)**

(74) Representative: **Roberts, Nicholas John et al
Rolls-Royce plc
Intellectual Property
SinB-38, P.O. Box 31
Derby Derbyshire DE24 8BJ (GB)**

(54) **Hydrophobic Surface**

(57) An article has a textured surface comprising locally melted, displaced and resolidified material produced by relative movement of a power beam over the surface. The article further has a wetting-resistant coating formed on the textured surface to make the surface hydrophobic and thereby restrict accumulation of ice.

EP 2 343 400 A1

## Description

The present invention relates to an article having a hydrophobic surface to restrict accumulation of ice.

Hydrophobic and super-hydrophobic surfaces have applications in numerous fields. For example, airframe and aeroengine components can be susceptible to ice build up. Providing hydrophobic or super-hydrophobic surfaces on such components can increase the run off of undercooled water droplets allowing them to re-entrain into the airflow before they nucleate and freeze. The surfaces can also alter the nucleation density and growth morphology of the ice that does form on the surfaces.

Thus a benefit of such surfaces is that they can reduce the rate of ice accretion on a surface and alter the morphology of the ice to a structure that is more readily and predictably shed.

Several polymer-based commercial coatings are available which are specifically designed to generate high water contact angles in order to improve ice shedding behaviour. For example, Luna Innovations Inc. have developed a superhydrophobic coating that can be spray coated onto large areas. Also available is HiRec 1450, a superhydrophobic coating that imparts both a nanoscale topography (from a nano-dispersion of PTFE spheres) and a chemical functionality (from a fluoropolymer) to give very large contact angles. However, both of these coatings are conceived for static applications that are subject to environmental icing, such as microwave antennae, aerials, satellite dishes, etc., and may not be able to withstand the erosive forces to which airframe and aeroengine components can be subject. For example, in gas turbines air speeds can be in the range 100-200 m/s. Fine (about $20\mu$m) water droplets are rapidly accelerated by the air and impact e.g. the fan, engine section stator vanes and variable inlet guide vanes with considerable force. Polymer based coating systems are likely to erode rapidly, losing the superhydrophobic properties of the coating.

US 2008/145528 describes a method of applying a nano-textured surface to a metallic substrate using a metallic braze as the binder for ceramic nanoparticles. The textured braze is then overlaid with an appropriate fluorocarbon or hydrocarbon coating in order to impart a high water contact angle.

Although this is an attempt to provide a nano-textured surface that is robust enough to survive in the harsh operating environment of a gas turbine intake, there are several disadvantages to using a braze.

Firstly, brazing is a high temperature process that involves melting or partially melting a metal on the surface of the substrate. Such processes can alter the microstructure of the underlying substrate by altering the grain size due to local annealing and/or surface alloying as the braze melts or diffuses into the substrate.

Secondly, the application of a braze interspersed with hard, brittle ceramic particles may undermine the fatigue life of a component, as the ceramic particles can act as local stress raisers and crack under load. Once a crack is initiated, it can continue to grow through the braze and substrate during subsequent stress cycles.

Thus, there remains a need for wetting-resistant surface treatments that can withstand the harsh environment found in e.g. a gas turbine intake.

According to a first aspect of the invention, there is provided an article having:

a textured surface comprising locally melted, displaced and resolidified material produced by relative movement of a power beam over the surface, and
a wetting-resistant coating formed on the textured surface to make the surface hydrophobic and thereby restrict accumulation of ice.

The surface may resist bonding with ice formed thereon. That is to say, the surface may form a weak bond with ice accumulated thereon.

By locally melting, displacing and resolidifying material, surface textures can be formed which reduce the amount of intimate surface contact between a water droplet and the surface. For example, if the textured surface has high points and low points, the area fraction of the surface in actual contact with the water droplet may be reduced. In combination with the coating, this can lead to a hydrophobic surface which restricts accumulation of ice. However, as the textured surface does not require the incorporation of hard brittle materials, such as ceramic particles, or brazing, problems of surface crack initiation and growth, and microstructural alteration can be avoided or reduced.

The article may include any one or any combination of the following optional features.

Typically, the textured surface is metallic. For example, the surface material of the article can be an aluminium alloy, a titanium alloy, a steel, a stainless steel etc.

Preferably the textured surface has roughness on both a nano length scale and micro length scale. Such dual scale roughness is believed to improve surface hydrophobicity.

The textured surface may comprise a pattern of asperities formed from the locally melted, displaced and resolidified material. For example, the asperities may be formed as an array of upstanding columns of resolidified material.

Preferably the pattern or array is a regular pattern or array. The asperities may have heights in the range from 1 to 10 $\mu$m, and/or have transverse diameters or widths in the range from 1 to 10 $\mu$m, although typically the height of each asperity is greater than its transverse diameter or width. The average spacing between nearest-neighbour asperities may be in the range from 2 to 30 $\mu$m. Each asperity preferably has a surface roughness with a peak to peak average spacing in the range from 1 to 10 nm.

The textured surface may comprise a pattern of recesses formed by the displacement of locally melted material. The recesses may have depths in the range from 5 to 20 $\mu$m. The average spacing between nearest-neighbour recesses may be in the range from 2 to 30 $\mu$m .

The power beam may be an electron beam. However, an alternative power beam can be a laser beam or an ion beam. Surface structural modification using power beams is described in WO 02/094497 and WO 2004/028731, which are incorporated by reference herein.

The wetting-resistant coating may have a thickness of at least 0.5 $\mu$m, and preferably of at least 30 $\mu$m.

Preferably the hydrophobic surface is superhydrophobic.

The wetting-resistant coating may comprise organosilesquioxane.

Organosilesquioxanes are silicon-oxygen based frameworks typically having the general formula $(RSiO_{1.5})_n$ in which n is an even number $\geq 2$, and preferably $\geq 4$. Organosilesquioxane having an odd number of silicon atoms are also available, including those having 7 silicon atoms, such as frameworks of formula $R_7Si_7O_9(OH)_3$. Organosilesquioxanes which have a very specific structure, for example a compound having the formula $(RSiO_{1.5})_8$ has an octahedral cage structure, are referred to in the field as organooligosilsequioxanes or polyhedral oligomeric silsesquiloxanes. Other examples include those compounds where n is 10 or 12.

R is at least one organic group and may optionally include a hydrogen group. Preferably the organic group is selected from optionally substituted alkyl (including cycloalkyl and aliphatic alkyl), optionally substituted alkenyl, optionally substituted alkynyl, optionally substituted aryl (including carboaryl and heteroaryl), optionally substituted heterocyclyl, halo, amide, ester, amino, phosphine, nitrile, cyanato and isocyanato, mercapto, anhydride, and mixtures thereof.

The R group may be selected so as to provide an organosilesquioxane that is liquid at ambient temperature. Such organosilesquioxane allow easy application of the organosilesquioxane as a coating composition.

The R group is preferably stable to hydrolysis.

The organic group may be selected from optionally substituted alkyl, optionally substituted aryl, halo and ester. The organic group may be selected from optionally substituted alkyl, optionally substituted aryl, halo and methacrylate. The organic group may be selected from methyl, phenyl, and methacrylate.

The organic group may be or comprise a halo group. The halo group may be fluorine. Where the organic group is substituted with a halo group, such as a fluoro group, the organosilesquioxane is said to comprise halogenated organic groups, such as fluorinated organic groups.

The water contact angle of the surface may be increased and/or the surface energy may be lowered by incorporation of a halo atom into the organic group of the organosilesquioxane.

The organic group may be an alkyl group substituted with one, or more, halo groups, preferably substituted with one or more fluoro groups, most preferably three fluoro groups. Such groups may be referred to as haloalkyl groups. For example, the alkyl group may be a fluoroalkyl group, such as a trifluoropropyl group. In a preferred embodiment, the organic group is a 3,3,3-trifluoropropyl group.

The alkyl group may be a perhaloalkyl group, preferably a perfluoroalkyl group, and most preferably a perfluorooctyl group.

The organosilesquioxane may be a crosslinked organosilesquioxane. The crosslinks may be formed between organic groups in the organosilesquioxane. Additionally or alternatively the crosslinks may be formed between residual silanol groups in the organosilesquioxane.

Organosilesquioxanes may comprise two or more different organic groups. Such organosilesquioxanes may be prepared from monomer starting materials having different organic groups as is known in the art.

The organosilesquioxane may comprise an alkyl group substituted with one, or more, halo groups and an ester group.

The organosilesquioxane may comprise a haloalkyl group, such as a perfluorooctyl group, and a methacrylate group. For example, the organosilesquioxane may formed by replacing about 3% of methacrylate groups with perfluorooctyl groups.

Suitable organosilesquioxanes for use in the wetting-resistant coating include those available under the name Vitolane (TM) from TWI, Cambridge, UK. Also suitable are the POSS (TM) range of organosilesquioxanes available from Hybrid Plastics, Hattiesburg, MS, USA.

The manufacture and modification of organosilesquioxanes is described in WO 2007/060387 and the references cited therein, which are incorporated by reference herein.

The organosilesquioxane may also be used as a component of a wetting-resistant coating.

Additionally or alternatively the wetting-resistant coating may comprise a fluorinated polymer.

The fluorinated polymer may be a poly(haloalkylene) polymer, or a polymer comprising poly(haloalkylene). Preferably the fluorinated polymer is a poly(haloalkylene) polymer. The polymer may be linear or branched, and may be crosslinked.

The haloalkylene may be an alkylene group substituted with one or more halo groups. Preferably, the haloalkylene is an alkylene group substituted with at least two halo groups.

The haloalkylene group may be linear or branched, where appropriate.

The haloalkylene may be a perhaloalkylene, where each hydrogen group in a alkylene is formally replaced with a halo group, as for example, in FEP (perfluoro(ethylene/propylene) and poly(tetrafluoroethylene).

The halo group may be fluoro and/or chloro.

The poly(haloalkylene) may comprise one, two or three different haloalkylene units. Where the polymer comprises two of more different alkylene units, these units may be arranged within the polymer in any arrangement, including block, random, periodic and alternate arrangements. The haloalkylene units may differ with regards to the number and/or nature of the halo group, and/or the identity of the alkylene group.

Preferably, the polymer comprises one or more ethylene and/or propylene units.

The fluorinated polymer may be selected from poly(tetrafluoroethylene) (PTFE), poly(perfluoro(ethylene/propylene) (FEP), poly(chlorotrifluoroethylene) (PCTFE) or poly(hexafluoropropylene).

Preferably, the coating comprises poly(tetrafluoroethylene).

Additionally or alternatively, the wetting-resistant coating may comprise a silicone rubber. Generally, a silicone rubber is a polysiloxane, such as a poly(disubstitutedsiloxane). Suitable substituents may include optionally substituted alkyl, heterocyclyl and aryl groups. The substituent may be an optionally substituted heterocyclyl group, for example an epoxy (oxirane) group.

Additionally or alternatively, the wetting-resistant coating may comprise a halogenated silane. Preferably, the halogenated silane is a fluorinated silane. The silane may be a silane of formula $SiR'_4$, where each R' is independently selected from halo and optionally substituted alkyl, heterocyclyl and aryl, wherein at least one group R' is halo, and at least one group R' is selected from optionally substituted alkyl, heterocyclyl and aryl.

R' may be selected from alkyl, heterocyclyl and aryl having one or more halo substituents, and optionally further substituted.

Preferably, R' is independently selected from halo and optionally substituted alkyl.

Preferably the alkyl group is alkyl having one or more halo substituents, and optionally further substituted. In one embodiment, the alkyl group is a perhaloalkyl group.

The halo group may be fluoro and/or chloro.

The silane may be perfluorodecyltrichlorosilane.

Preferably, the R' group is selected so as to provide a silane that is liquid at ambient temperature.

The article may be an article that is susceptible in use to ice build-up.

The article may be a component of a gas turbine engine. For example, the component may be a nacelle lip, a splitter leading edge, a fan blade, a compressor inlet guide vane (such as a VIGV (variable inlet guide vane) or ESS (engine section stator)), a fan outlet guide vane, a compressor blade, a compressor vane (such as a VSV (variable stator vane)) or a spinner.

The article may be a component of an aircraft, such as a wing leading edge, a control surface. The article may be a propeller on an open rotor engine or on a turbo-prop engine.

Indeed, the article may be any component or structure that is susceptible to unwanted ice accretion, such as an item of ship superstructure or deck machinery (for ships operating in extreme northerly or southerly latitudes), satellite dishes, telecommunication aerials, radar domes etc.

A second aspect of the invention provides a method of surface treating an article, the method comprising the steps of:

causing relative movement between a power beam and an article in order to locally melt, displace and resolidify surface material of the article and thereby produce a textured surface on the article, and

forming a wetting-resistant coating on the textured surface to make the surface hydrophobic and thereby restrict accumulation of ice.

Thus the method can be used to produce an article according to the previous aspect, the article optionally including any one or any combination of the optional features described above in relation to the first aspect.

The wetting-resistant coating can be formed by, for example, dipping, roll-coating, spraying or painting liquid organosilesquioxane or a solution containing organosilesquioxane onto the textured surface. This can be followed by curing (e.g. thermal curing).

Embodiments of the invention will now be described by way of example with reference to the accompanying drawings in which:

Figure 1 shows a schematic cross-section through a textured and coated surface according to the present invention;
Figure 2 shows schematically a water droplet on the cross-section of Figure 1;

Figure 3 shows a longitudinal cross-section through the front of a gas turbine engine;

Figure 4 shows SEM images of (a) an array of sculpted columns and (b) a single projection surrounded by six holes;

Figure 5 shows a surface with at left an organosilsesquioxane-based coating in which 3% of methacrylate groups are replaced with perfluorooctyl groups and at right an uncoated region of glass, respective water droplets being located on the coated and uncoated areas; and,

Figure 6 shows exemplary plots of fracture energy and percentage adhesive failure against temperature.

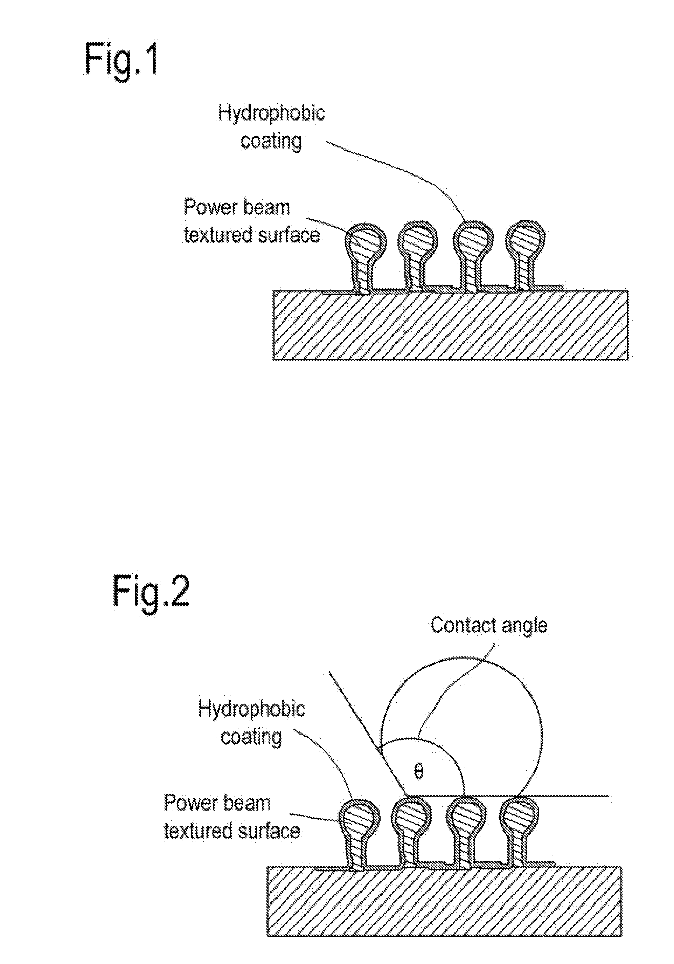

As shown schematically in Figure 1, the present invention, by providing a power beam textured surface with a wetting-resistant coating, can create a robust, engineered, hydrophobic or superhydrophobic surface.

The combination of texture and coating can generate the low surface energies required to impart very high water contact angles, and hence hydrophobicity or superhydrophobicity to the surface. These angles can be in excess of 120° as shown schematically in Figure 2. This type of surface treatment can impart good ice-phobic characteristics to gas turbine inlet components.

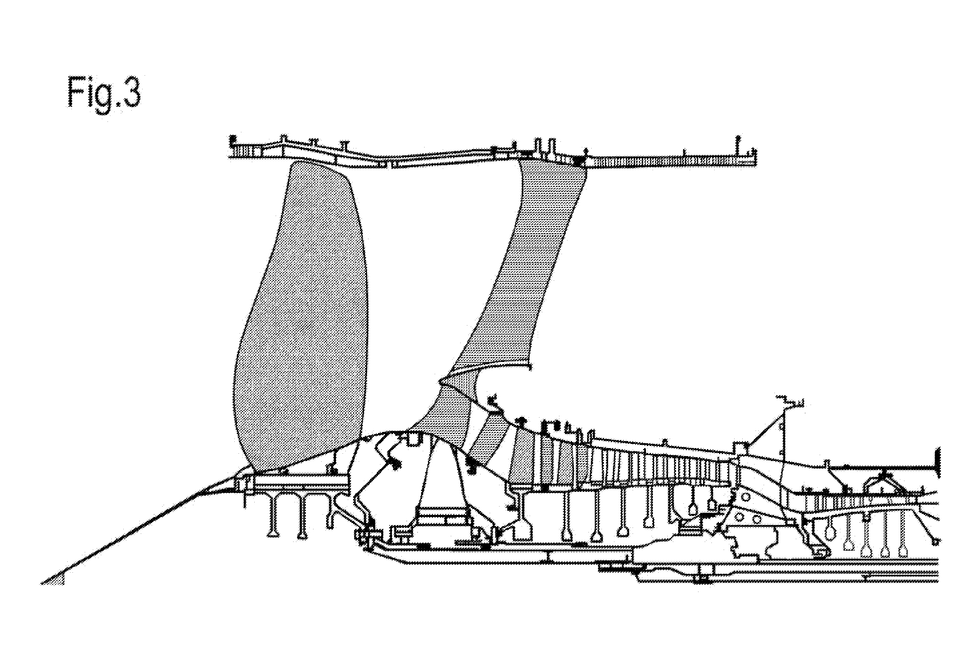

The surface treatment is well suited to metallic components (with surfaces formed of e.g. titanium alloy, aluminium alloy, stainless steel, steel, etc.) used in gas turbines. For example, the surface treatment can encourage ice shedding on both rotating components (e.g. fan blades and compressor blades) and static components (e.g. engine section stators, variable inlet guide vanes, outlet guide vanes, nacelle lip, splitter lip, spinner nose), which are susceptible to ice build-up. Such components are shaded in the schematic longitudinal cross-section through the front of a gas turbine engine shown in Figure 3. Advantageously, the improved ice shedding characteristics that can be achieved, allows these and associated components to be better optimised for aerodynamic performance and less consideration given to ice shedding and ice impact tolerance.

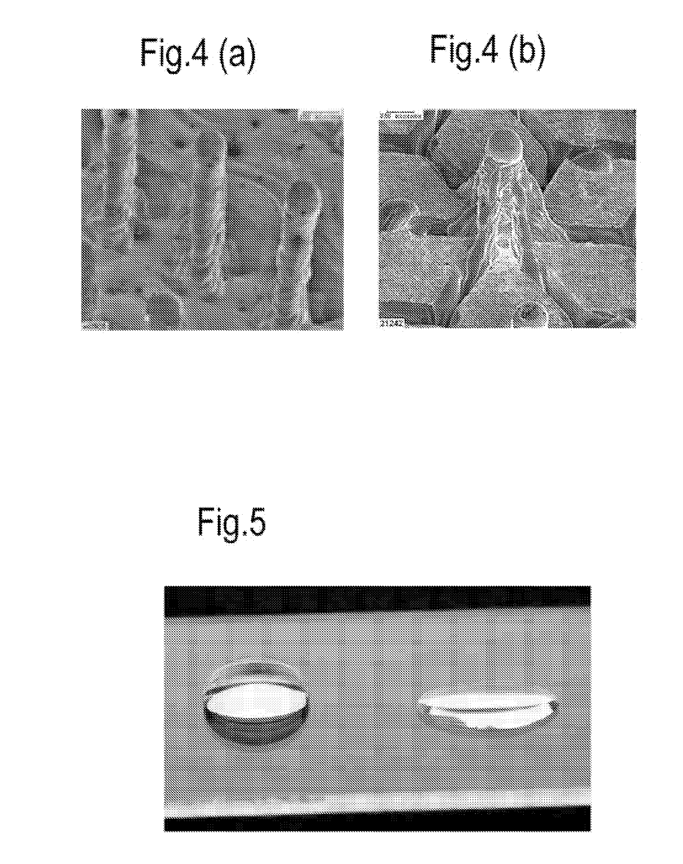

WO 02/094497 and WO 2004/028731 describe methods of texturing a surface using power beams, typically an electron beam but possibly a laser beam or ion beam. Rastering a beam over the surface allows patterns or arrays of regular features to be grown on the surface. The scale of the surface features can be controlled by the beam power, beam size, beam movement and other variables. Figure 4 shows SEM images of (a) an array of sculpted columns and (b) a single projection surrounded by six holes. In both images the scale bar is $250\mu$m. Smaller beam spot sizes can produce even finer features than those shown in Figure 4.

Advantageously for the promotion of surface hydrophobicity, the asperities shown in Figure 4 have a surface roughness on a finer scale than the transverse diameter of the individual asperities. Finer asperities produced with smaller beam spot sizes can have nanometer scale surface roughness.

EP 1957563 and WO 2007/060387, which are incorporated by reference herein, describe methods of manufacturing and applying organosilsesquioxanes, which are molecular organic-inorganic hybrid structures that can be incorporated into or applied as thin coatings onto a wide variety of substrates. Such a coating comprises an inorganic siloxane based network comprising silicon atoms and oxygen atoms and one or more organic groups (such as a fluorinated alkyl groups). These can be arranged in "ladder" or "cage" configurations with the molecular weight being determined by the number of Si atoms.

The coatings can be applied using sol-gel methodology. In a typical sol-gel process, a precursor is subjected to a series of hydrolysis and polymerisation reactions to form a colloidal suspension, or a "sol". Thin films of the sol can be produced on articles by e.g. spin-coating or dip-coating. Thicker coatings of the sol can be set into a "gel". With further drying and heat-treatment, the sol or gel can be converted into dense coating.

An organosilsesquioxane solution (typically a solution contains about 20% solids by weight in solvent) or liquid organosilsesquioxane can be applied by, for example, dipping, roll-coating, spraying or painting onto a substrate, with evaporation of a carrier solvent where one is used followed by (e.g. thermal) curing. This can produce a transparent and colourless thin film which may be around 1 $\mu$m thick, although thicker coatings of up to about 50 $\mu$m can be achieved.

Coatings comprising organosilsesquioxanes can provide excellent corrosion resistance, perform well in wear and scratch tests and impart high water contact angles to surfaces. The incorporation of fluorine groups (or other functional organic groups) to the organosilsesquioxane allows the coating to be optimised to maximise the water contact angle. In this way, superhydrophobic surfaces can be produced. Organic groups including phenyl, methyl, or methacrylate can be effective, although fluorine or fluoridated groups can provide the largest water contact angles and are preferred for producing ice phobic coatings.

Thus in some embodiments, a methacrylate containing organosilsesquioxane has about 3% of the methacrylate groups replaced with perfluorooctyl groups. The addition of fluorine reduces surface energy, producing a coating with an increased water contact angle. Figure 5 shows a surface with at left an organosilsesquioxane-based coating in which 3% of methacrylate groups are replaced with perfluorooctyl groups and at right an uncoated region of glass. Respective water droplets are located on the coated and uncoated areas. The increase in water contact angle for the organosilsesquioxane coating containing perfluorooctyl groups is evident.

Advantages of the surface treatment of the present invention are:

- The parent material of the article can be used to form the textured surface ensuring no interfacial mis-match between surface and substrate, which can improve stability and life.
- The depth of the surface texture can be greater than the thickness of known wetting-resistant coatings, which can increase longevity.
- Even if the wetting-resistant coating is substantially eroded, the surface texture can maintain dual scale roughness (i.e. roughness on the scale of the height and width of individual asperities, plus finer scale surface roughness on the asperities) and chemical functionality to give high water contact angles.
- The surface texture and coating do not add significant weight to the article because the texture is provided by the parent material.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

The term "hydrophobic" as used herein, pertains to a surface which in air at room temperature and at atmospheric pressure has a contact angle of greater than 90° with a static droplet of pure water.

The term "superhydrophobic" as used herein, pertains to a surface which in air at room temperature and at atmospheric pressure has a contact angle of greater than 120° with a static droplet of pure water.

The phrase "optionally substituted" as used herein, pertains to a parent group which may be unsubstituted or which may be substituted.

Unless otherwise specified, the term "substituted" as used herein, pertains to a parent group which bears one or more substituents. The term "substituent" is used herein in the conventional sense and refers to a chemical moiety which is covalently attached to, or if appropriate, fused to, a parent group. A wide variety of substituents are well known, and methods for their formation and introduction into a variety of parent groups are also well known.

Alkyl: The term "alkyl" as used herein, pertains to a monovalent moiety obtained by removing a hydrogen atom from a carbon atom of a saturated hydrocarbon compound, which may be aliphatic or alicyclic (cycloalkyl). The alkyl group may be a $C_{1-20}$, $C_{1-10}$, $C_{3-20}$, $C_{3-10}$, $C_{1-8}$, $C_{3-8}$, $C_{1-6}$ or $C_{3-6}$ alkyl group.

Examples of alkyl groups include, but are not limited to, methyl ($C_1$), ethyl ($C_2$), propyl ($C_3$), butyl ($C_4$), pentyl ($C_5$), hexyl ($C_6$), heptyl ($C_7$) and octyl ($C_8$).

An example of a substituted alkyl group includes, but is not limited to, perfluorooctyl ($C_8F_{17}$).

Examples of linear alkyl groups include, but are not limited to, methyl ($C_1$), ethyl ($C_2$), n-propyl ($C_3$), n-butyl ($C_4$), n-pentyl (amyl) ($C_5$), n-hexyl ($C_6$), n-heptyl ($C_7$) and n-octyl ($C_8$).

Examples of branched alkyl groups include iso-propyl ($C_3$), iso-butyl ($C_4$), sec-butyl ($C_4$), tert-butyl ($C_4$), iso-pentyl ($C_5$), and neo-pentyl ($C_5$).

Examples of cycloalkyl groups include, but are not limited to, those derived from:

saturated monocyclic hydrocarbon compounds:

cyclopropane ($C_3$), cyclobutane ($C_4$), cyclopentane ($C_5$), cyclohexane ($C_6$), cycloheptane ($C_7$), methylcyclopropane ($C_4$), dimethylcyclopropane ($C_5$), methylcyclobutane ($C_5$), dimethylcyclobutane ($C_6$), methylcyclopentane ($C_6$), dimethylcyclopentane ($C_7$) and methylcyclohexane ($C_7$); and

saturated polycyclic hydrocarbon compounds:
norcarane ($C_7$), norpinane ($C_7$), norbornane ($C_7$).

Alkenyl: The term "alkenyl" as used herein, pertains to a monovalent moiety obtained by removing a hydrogen atom from a carbon atom of an unsaturated hydrocarbon compound having one or more carbon-carbon double bonds, which may be aliphatic or alicyclic (cycloalkenyl). The alkenyl group may be a $C_{2-20}$, $C_{2-10}$, $C_{3-20}$, $C_{3-10}$, $C_{2-6}$ or $C_{3-6}$ alkenyl group.

Examples of alkenyl groups include, but are not limited to, ethenyl (vinyl, $-CH=CH_2$), 1-propenyl ($-CH=CH-CH_3$), 2-propenyl (allyl, $-CH-CH=CH_2$), isopropenyl (1-methylvinyl, $-C(CH_3)=CH_2$), butenyl ($C_4$), pentenyl ($C_5$), and hexenyl ($C_6$).

An example of a substituted alkenyl group includes, but is not limited to, styrene ($-CH=CHPh$ or $-C(Ph)=CH_2$).

Examples of cycloalkenyl groups include, but are not limited to, those derived from cyclopropene ($C_3$), cyclobutene ($C_4$), cyclopentene ($C_5$), cyclohexene ($C_6$), methylcyclopropene ($C_4$), dimethylcyclopropene ($C_5$), methylcyclobutene ($C_5$), dimethylcyclobutene ($C_6$), methylcyclopentene ($C_6$), dimethylcyclopentene ($C_7$) and methylcyclohexene ($C_7$).

Alkynyl: The term "alkynyl" as used herein, pertains to a monovalent moiety obtained by removing a hydrogen atom from a carbon atom of an unsaturated hydrocarbon compound having one or more carbon-carbon triple bonds, which may be aliphatic or alicyclic (cycloalkynyl). The alkynyl group may be a $C_{2-20}$, $C_{2-10}$, $C_{3-20}$, $C_{3-10}$, $C_{2-6}$ or $C_{3-6}$ alkenyl group.

Examples of alkynyl groups include, but are not limited to, ethynyl (ethinyl, -CΞCH) and 2-propynyl (propargyl, -CH$_2$-CΞCH).

Heterocyclyl: The term "heterocyclyl" as used herein, pertains to a monovalent moiety obtained by removing a hydrogen atom from a ring atom of a heterocyclic compound. The heterocyclyl group may be a $C_{3-20}$ heterocyclyl group of which from 1 to 10 are ring heteroatoms, a $C_{3-7}$ heterocyclyl group of which from 1 to 4 are ring heteroatoms, or a $C_{5-6}$ heterocyclyl group of which 1 or 2 are ring heteroatoms. In one embodiment, the heterocyclyl group is a $C_3$ heterocyclyl group. In one embodiment, the heterocyclyl group is epoxy. In one embodiment, the heterocyclyl group is obtained by removing a hydrogen atom from a ring carbon atom of a heterocyclic compound.

In one embodiment, the heteroatoms may be selected from O, N or S. In one embodiment the heterocyclyl group is obtained by removing a hydrogen atom from a ring nitrogen atom, where present, of a heterocyclic compound.

In this context, the prefixes (e.g. $C_{3-20}$, $C_{3-7}$, $C_{5-6}$, etc.) denote the number of ring atoms, or range of number of ring atoms, whether carbon atoms or heteroatoms. For example, the term "$C_{5-6}$heterocyclyl", as used herein, pertains to a heterocyclyl group having 5 or 6 ring atoms.

Examples of monocyclic heterocyclyl groups include, but are not limited to, those derived from:

$N_1$: aziridine ($C_3$), azetidine ($C_4$), pyrrolidine (tetrahydropyrrole) ($C_5$), pyrroline (e.g., 3-pyrroline, 2,5-dihydropyrrole) ($C_5$), 2H-pyrrole or 3H-pyrrole (isopyrrole, isoazole) ($C_5$), piperidine ($C_6$), dihydropyridine ($C_6$), tetrahydropyridine ($C_6$), azepine ($C_7$);
$O_1$: oxirane ($C_3$), oxetane ($C_4$), oxolane (tetrahydrofuran) ($C_5$), oxole (dihydrofuran) ($C_5$), oxane (tetrahydropyran) ($C_6$), dihydropyran ($C_6$), pyran ($C_6$), oxepin ($C_7$);
$S_1$: thiirane ($C_3$), thietane ($C_4$), thiolane (tetrahydrothiophene) ($C_5$), thiane (tetrahydrothiopyran) ($C_6$), thiepane ($C_7$);
$O_2$: dioxolane ($C_5$), dioxane ($C_6$), and dioxepane ($C_7$);
$O_3$: trioxane ($C_6$);
$N_2$: imidazolidine ($C_5$), pyrazolidine (diazolidine) ($C_5$), imidazoline ($C_5$), pyrazoline (dihydropyrazole) ($C_5$), piperazine ($C_6$);
$N_1O_1$: tetrahydrooxazole ($C_5$), dihydrooxazole ($C_5$), tetrahydroisoxazole ($C_5$), dihydroisoxazole ($C_5$), morpholine ($C_6$), tetrahydrooxazine ($C_6$), dihydrooxazine ($C_6$), oxazine ($C_6$);
$N_1S_1$: thiazoline ($C_5$), thiazolidine ($C_5$), thiomorpholine ($C_6$);
$N_2O_1$: oxadiazine ($C_6$);
$O_1S_1$: oxathiole ($C_5$) and oxathiane (thioxane) ($C_6$); and,
$N_1O_1S_1$: oxathiazine ($C_6$).

Examples of substituted monocyclic heterocyclyl groups include those derived from saccharides, in cyclic form, for example, furanoses ($C_5$), such as arabinofuranose, lyxofuranose, ribofuranose, and xylofuranse, and pyranoses ($C_6$), such as allopyranose, altropyranose, glucopyranose, mannopyranose, gulopyranose, idopyranose, galactopyranose, and talopyranose.

Aryl: The term "aryl", as used herein, pertains to a monovalent moiety obtained by removing a hydrogen atom from an aromatic ring atom of an aromatic compound. The aryl group may be a $C_{3-20}$, $C_{5-7}$ or $C_{5-6}$ aryl group.

In this context, the prefixes (e.g. $C_{3-20}$, $C_{5-7}$, $C_{5-6}$, etc.) denote the number of ring atoms, or range of number of ring atoms, whether carbon atoms or heteroatoms. For example, the term "$C_{5-6}$ aryl" as used herein, pertains to an aryl group having 5 or 6 ring atoms.

The ring atoms may be all carbon atoms, as in "carboaryl groups".

Examples of carboaryl groups include, but are not limited to, those derived from benzene (i.e. phenyl) ($C_6$), naphthalene ($C_{10}$), azulene ($C_{10}$), anthracene ($C_{14}$), phenanthrene ($C_{14}$), naphthacene ($C_{18}$), and pyrene ($C_{16}$).

Examples of aryl groups which comprise fused rings, at least one of which is an aromatic ring, include, but are not limited to, groups derived from indane (e.g. 2,3-dihydro-1H-indene) ($C_9$), indene ($C_9$), isoindene ($C_9$), tetraline (1,2,3,4-tetrahydronaphthalene) ($C_{10}$), acenaphthene ($C_{12}$), fluorene ($C_{13}$), phenalene ($C_{13}$), acephenanthrene ($C_{15}$), and aceanthrene ($C_{16}$).

Alternatively, the ring atoms may include one or more heteroatoms, as in "heteroaryl groups". Examples of monocyclic heteroaryl groups include, but are not limited to, those derived from: $N_1$: pyrrole (azole) ($C_5$), pyridine (azine) ($C_6$); $O_1$: furan (oxole) ($C_5$); $S_1$: thiophene (thiole) ($C_5$); $N_1O_1$: oxazole ($C_5$), isoxazole ($C_5$), isoxazine ($C_6$); $N_2O_1$: oxadiazole (furazan) ($C_5$); $N_3O_1$: oxatriazole ($C_5$); $N_1S_1$: thiazole ($C_5$), isothiazole ($C_5$); $N_2$: imidazole (1,3-diazole) ($C_5$), pyrazole (1,2-diazole) ($C_5$), pyridazine (1,2-diazine) ($C_6$), pyrimidine (1,3-diazine) ($C_6$) (e.g., cytosine, thymine, uracil), pyrazine (1,4-diazine) ($C_6$); $N_3$: triazole ($C_5$), triazine ($C_6$); and, $N_4$: tetrazole ($C_5$).

Examples of heteroaryl which comprise fused rings, include, but are not limited to: $C_9$ (with 2 fused rings)

derived from benzofuran ($O_1$), isobenzofuran ($O_1$), indole ($N_1$), isoindole ($N_1$), indolizine ($N_1$), indoline ($N_1$), isoindoline ($N_1$), purine ($N_4$) (e.g., adenine, guanine), benzimidazole ($N_2$), indazole ($N_2$), benzoxazole ($N_1O_1$), benzisoxazole ($N_1O_1$), benzodioxole ($O_2$), benzofurazan ($N_2O_1$) benzotriazole ($N_3$), benzothiofuran ($S_1$), benzothiazole ($N_1S_1$), benzothiadiazole ($N_2S$); $C_{10}$ (with 2 fused rings) derived from chromene ($O_1$), isochromene ($O_1$), chroman ($O_1$), isochroman ($O_1$), benzodioxan ($O_2$), quinoline ($N_1$), isoquinoline ($N_1$), quinolizine ($N_1$), benzoxazine ($N_1O_1$), benzodiazine ($N_2$), pyridopyridine ($N_2$), quinoxaline ($N_2$), quinazoline ($N_2$), cinnoline ($N_2$), phthalazine ($N_2$), naphthyridine ($N_2$), pteridine ($N_4$); $C_{11}$ (with 2 fused rings) derived from benzodiazepine ($N_2$); $C_{13}$ (with 3 fused rings) derived from carbazole ($N_1$), dibenzofuran ($O_1$), dibenzothiophene ($S_1$), carboline ($N_2$), perimidine ($N_2$), pyridoindole ($N_2$); and, $C_{14}$ (with 3 fused rings) derived from acridine ($N_1$), xanthene ($O_1$), thioxanthene ($S_1$), oxanthrene ($O_2$), phenoxathiin ($O_1S_1$), phenazine ($N_2$), phenoxazine ($N_1O_1$), phenothiazine ($N_1S_1$), thianthrene ($S_2$), phenanthridine ($N_1$), phenanthroline ($N_2$), phenazine ($N_2$).

The above groups, whether alone or part of another substituent, may themselves optionally be substituted with one or more groups selected from themselves and the substituents listed below.

Halo: -F, -Cl, -Br, and -I.

Ester: -C(=O)OR (carboxylate, carboxylic acid ester, oxycarbonyl) or -OC(=O)R (acyloxy, reverse eter), wherein R is an ester substituent, for example, an alkyl group, an alkenyl group, an alkynyl group, a heterocyclyl group, or an aryl group, preferably an alkyl group or an alkenyl group, most preferably an alkenyl group.

Examples of ester groups include, but are not limited to, -C(=O)OCH$_3$, -C(=O)OCH$_2$CH$_3$, -C(=O)OC(CH$_3$)$_3$, and -C(=O)OPh.

Other examples of ester groups include, but are not limited to, -OC(=O)CH$_3$ (acetoxy), -OC(=O)CH$_2$CH$_3$, -OC(=O)C(CH$_3$)$_3$, -OC(=O)Ph, -OC(=O)CH$_2$Ph, -OC(=O)CH=CH$_2$ (acrylate) and -OC(=O)C(CH$_3$)=CH$_2$ (methacrylate).

Amino: -NR$^1$R$^2$ , wherein R$^1$ and R$^2$ are independently amino substituents, for example, hydrogen, an alkyl group (also referred to as alkylamino or dialkylamino), an alkenyl group, an alkynyl group, a heterocyclyl group, or an aryl group, preferably H or an alkyl group, or, in the case of a "cyclic" amino group, R$^1$ and R$^2$, taken together with the nitrogen atom to which they are attached, form a heterocyclic ring having from 4 to 8 ring atoms. Amino groups may be primary (-NH$_2$), secondary (-NHR$^1$), or tertiary (-NHR$^1$R$^2$), and in cationic form, may be quaternary (-$^+$NR$^1$R$^2$R$^3$). Examples of amino groups include, but are not limited to, -NH$_2$, -NHCH$_3$, -NHC(CH$_3$)$_2$, -N(CH$_3$)$_2$, -N(CH$_2$CH$_3$)$_2$, and -NHPh. Examples of cyclic amino groups include, but are not limited to, aziridino, azetidino, pyrrolidino, piperidino, piperazino, morpholino, and thiomorpholino.

Anhydride: -C(=O)OC(=O)R, wherein R is independently an anhydride substituent, for example an alkyl group, an alkenyl group, an alkynyl group, a heterocyclyl group, or an aryl group, preferably an alkyl group.

Cyanato: -OCN.

Isocyanato: -NCO.

Cyano (nitrile, carbonitrile): -CN.

Phosphino (phosphine): -PR$_2$, wherein R is a phosphino substituent, for example, -H, an alkyl group, an alkenyl group, an alkynyl group, a heterocyclyl group, or an aryl group, preferably -H, an alkyl group, or an aryl group. Examples of phosphino groups include, but are not limited to, -PH$_2$, -P(CH$_3$)$_2$, -P(CH$_2$CH$_3$)$_2$, -P(t-Bu)$_2$, and -P(Ph)$_2$.

Mercapto: -SR, wherein R is a mercapto substituent, for example, -H, an alkyl group, an alkenyl group, an alkynyl group, a heterocyclyl group, or an aryl group, preferably -H, an alkyl group, or an aryl group. Examples of mercapto groups include, but are not limited to, -SH, -SCH$_3$, -SCH$_2$CH$_3$, -S-t-Bu, and -SPh.

Through testing of various surface configurations, it has been determined that hydrophobicity or super hydrophobicity in itself is not imply a reduced adhesive strength with ice. In particular the droplet sizes used in hydrophobicity tests are typically larger than the smaller droplets which nucleate and freeze to instigate icing of a surface. In some instances, hydrophobic surfaces may in fact offer an increased ice bond strength than non-hydrophobic counterparts.

This determination has resulted in the finding that the reduction of the bond strength between a surface and ice thereon requires consideration of the mechanical properties of the surface. If a weaker bond is formed with ice, the ice will break away from the surface more readily, thereby preventing build-up of a relatively large mass of ice.

Particularly in the case of surfaces in motion, such as aircraft bodies and wings, gas turbine engines, wind turbines and the like, ice will shed unpredictably if allowed to accumulate to large a large mass. Accordingly the present invention can allow ice shedding to occur more frequently and predictably under application of a smaller removal force. Tensile and shear loading regimes can be used in combination and/or in isolation to assess the removal force required to detach ice from a surface.

Icing of test surfaces was achieved using an icing wind tunnel at temperatures in the region of -5°C to -20°C. Humidity was controlled using water atomiser nozzles to inject water into the system, the nozzles being selected to control the water droplet size. The water contact angle of the tested surfaces was also determined separately using conventional drop shape analysis techniques.

A mode 1 (tensile) fracture toughness test was carried out on the test surfaces once ice had accumulated. In this arrangement a crack is driven down the ice-coating interface from a pre-existing flaw. The flaw or defect was generated by holding a small member against the surface to be tested during accumulation of ice. In this example, a PTFE member was used for this purpose.

The force required to extend this crack from the 'defect' down the interface provides a measure of the strength of the bond between the ice and the coated substrate. The lower the fracture energy, the weaker the ice-substrate interface and the easier it is to shed ice. A determination of fracture energy can be made according to the equations given below.

The fracture energy ($2_T$) for a cohesive failure is calculated using:

$$2\tau = \frac{P_c^2 c}{E f_1\left(\dfrac{h}{c}\right)}$$

and the fracture energy ($\theta$) for an adhesive failure is calculated using:

$$\theta = \frac{P_c^2 c}{E f_2\left(\dfrac{h}{c}\right)}$$

where, Pc is the critical pressure for failure; c is the radius of the artificial flaw; E is the Young's modulus of ice; h is the thickness of the ice; and, f1 is a geometric factor calculated from:

$$f_1 = \frac{1}{1-\upsilon^2}\left\{\frac{3}{32}\left[\left(\frac{c}{h}\right)^3 + \left(\frac{c}{h}\right)\frac{4}{1-\upsilon}\right] + \frac{1}{\pi}\right\}^{-1}$$

and f2 is a geometric factor calculated from:

$$f_2 = \frac{1}{1-\upsilon^2}\left\{\frac{3}{32}\left[\left(\frac{c}{h}\right)^3 + \left(\frac{c}{h}\right)\frac{4}{1-\upsilon}\right] + \frac{2}{\pi}\right\}^{-1}$$

where v is Poisson's ratio for ice.

The fracture energy (either $2_T$ or $\theta$) is the energy required to create unit area of new crack plane during propagation of failure.

An adhesive failure is a failure wholly at the ice/substrate interface, a cohesive failure is a failure (crack) that develops through the ice (not along the interface). Mixed mode failures can occur, these are partly adhesive and partly cohesive. Visual inspection allows assessment of the nature of the failure to determine the proportion of cohesive and adhesive fracture.

The measures of fracture energy and/or percentage adhesive fracture can be assessed over a range of temperatures for different surface types in order to determine surface characteristics which form a suitably weak bond with ice in accordance with the present invention.

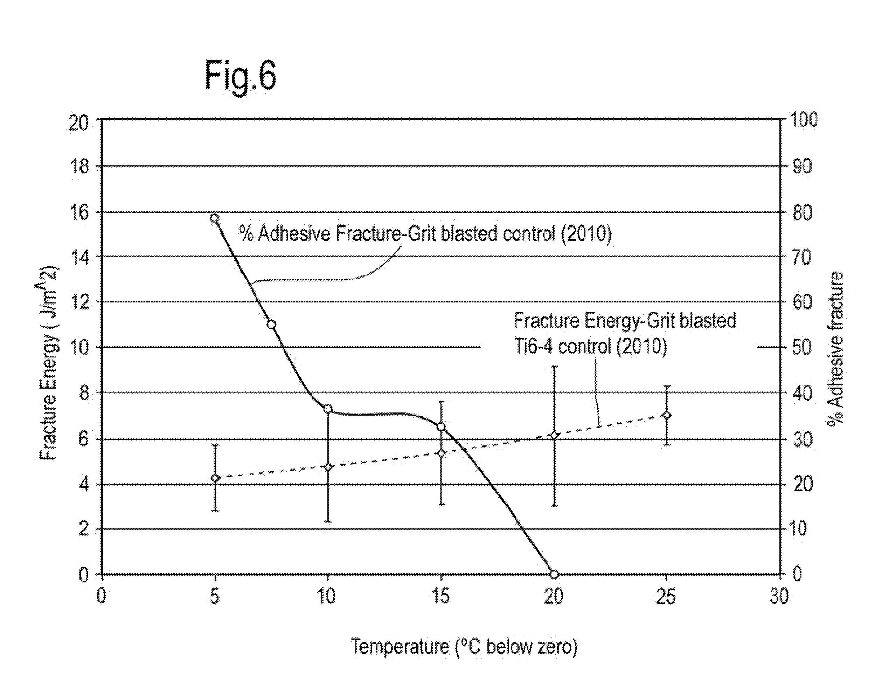

Test data is presented in figure 6, which shows plots of fracture energy (left hand axis) and percentage adhesive fracture (right hand axis) against temperature for a control surface which took the from of a conventional Ti6-4 gas turbine engine material.

An ideal surface would demonstrate 100% adhesive fracture over the entire temperature range below freezing with a consistently minimal fracture energy. This result would indicate a weak ice-substrate interface with a fracture controlled by the coating / surface and not dominated by the behaviour of the crack in the ice. Tested surfaces typically display varying characteristics over the tested temperature range of -5°C to -25°C and so acceptability criteria for the surfaces have been determined. It should be appreciated that such criteria may be based on absolute values or else relative values compared against control values determined from testing conventional surfaces which are not in accordance with the present invention.

Test results for surface according to the present invention were overlaid on the control plots of figure 6 to assess the difference from the control plots.

Acceptability criteria were devised in this example by reference to two 'figures of merit' (FOM), devised to aid ranking of results. These FOM values Comprise the Fracture Energy FOM (FEFOM), which can be expressed as:

*FEFOM = Min FE l Peak FE*

and also the Adhesive Energy FOM (%AFOM), which can be expressed as:

*%AFOM = % adhesive fracture at max temp - % adhesive fracture at min temp*

The FEFOM indicates the relative magnitude of the FE increase with temperature change. The ideal result would be '1' indicating a flat FE profile with temperature. Note that this does not describe the position of the curve relative to the Control curve, because of curve shape differences and scatter this is better done with reference to the graphs than by a purely numerical measure.

The %AFOM describes the difference in adhesive/cohesive fracture behaviour between -5°C (max) and -20°C (min) in this embodiment. The ideal result would be '0' indicating a consistent, adhesive failure across this temperature range.

Acceptance criteria for surfaces which form weak bonds with ice in accordance with one embodiment of the present invention can be defined as:

$0 \leq \%AFOM \leq 30$
And/or
$0.75 \leq FEFOM \leq 1$

Additionally or alternatively surfaces may be acceptable if they demonstrate fracture energy of 4 J/m$^2$ or less for the temperature range of 0 to - 25°C. A surface may be acceptable if it demonstrates fracture energy for ice of 3 J/m$^2$ or less for the temperature range of 0 to -25°C.

Additionally or alternatively a surface may be acceptable if it demonstrates a percentage adhesive fracture of 60%, or more preferably 70%, or higher over the entire temperature range of -5 to -20°C.

**Claims**

1. An article having:

   a textured surface comprising locally melted, displaced and resolidified material produced by relative movement of a power beam over the surface, and
   a wetting-resistant coating formed on the textured surface,
   whereby the textured surface and wetting-resistant coating are such as to resist bonding with ice formed on the article and thereby restrict accumulation of ice.

2. An article according to claim 1, wherein the textured surface comprises a pattern of asperities formed from the locally melted, displaced and resolidified material.

3. An article according to claim 1 or 2, wherein the textured surface comprises a pattern of recesses formed by the displacement of locally melted material.

4. An article according to any one of the previous claims, wherein the textured surface is metallic.

5. An article according to any one of the previous claims, wherein the power beam is an electron beam.

6. An article according to any one of the previous claims, wherein the coating comprises organosilesquioxane.

7. An article according to claim 6, wherein the organosilesquioxane has an organic group selected from optionally substituted alkyl, optionally substituted aryl, halo and ester.

8. An article according to claim 7, wherein the organic group is or comprises fluorine.

9. An article according to any one of claims 6 to 8, wherein the organosilesquioxane has a fluoroalkyl organic group.

10. An article according to any one of the previous claims which is a component of a gas turbine engine.

11. An article according to claim 10 which is a nacelle lip, a splitter lip, a fan blade, a compressor inlet guide vane, a fan outlet guide vane, a compressor blade, a compressor vane or a spinner.

12. An article according to any preceding claim, wherein the article surface is super-hydrophobic.

13. An article according to any preceding claim, wherein the textured surface comprises a pattern of asperities, each asperity having a surface roughness on a finer scale than the transverse diameter of the individual asperities

14. An article according to any preceding claim, wherein the textured surface comprises a pattern of asperities, each asperity having a nanometer scale surface roughness.

15. A method of surface treating an article, the method comprising the steps of:

causing relative movement between a power beam and an article in order to locally melt, displace and resolidify surface material of the article and thereby produce a textured surface on the article, and

forming a wetting-resistant coating on the textured surface to make the surface hydrophobic, wherein the surface bonds weakly with ice so as to restrict accumulation of ice thereon.

# Fig.1

Hydrophobic coating

Power beam textured surface

# Fig.2

Contact angle

Hydrophobic coating

Power beam textured surface

θ

Fig.3

Fig.4 (a)

Fig.4 (b)

Fig.5

Fig.6

Europäisches
Patentamt

European
Patent Office

Office européen
des brevets

# EUROPEAN SEARCH REPORT

Application Number

EP 10 19 2346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 2008/145528 A1 (DENG TAO [US] ET AL) 19 June 2008 (2008-06-19) * paragraphs [0048] - [0050] * ----- | 1-15 | INV. C23C24/00 C23C24/08 |
| Y | EP 1 750 018 A2 (GEN ELECTRIC [US]) 7 February 2007 (2007-02-07) * paragraphs [0053] - [0055] * ----- | 1-15 | |
| Y | US 2007/031639 A1 (HSU MING F [US] ET AL) 8 February 2007 (2007-02-08) * paragraphs [0034] - [0036]; figures 1-8 * ----- | 1-15 | |
| Y | US 2007/028588 A1 (VARANASI KRIPA K [US] ET AL) 8 February 2007 (2007-02-08) * paragraphs [0051] - [0053]; figures 1-11 * ----- | 1-15 | |
| A | EP 0 246 914 A1 (ROLLS ROYCE PLC [GB]) 25 November 1987 (1987-11-25) * claims 1-14; figures 1-7 * ----- | 1-15 | TECHNICAL FIELDS SEARCHED (IPC) |
| Y,D | WO 02/094497 A2 (WELDING INST [GB]) 28 November 2002 (2002-11-28) * pages 1-2 * ----- | 1-15 | C23C |
| Y,D | WO 2004/028731 A1 (WELDING INST [GB]; DANCE BRUCE GUY IRVINE [GB]; KELLAR EWEN JAMES CRAW) 8 April 2004 (2004-04-08) * page 3; claims 1-33; figures 1-29 * ----- | 1-15 | |

The present search report has been drawn up for all claims

| Place of search | Date of completion of the search | Examiner |
|---|---|---|
| Munich | 24 May 2011 | Lombois, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

ANNEX TO THE EUROPEAN SEARCH REPORT
ON EUROPEAN PATENT APPLICATION NO.

EP 10 19 2346

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| US 2008145528 | A1 | 19-06-2008 | NONE | | |
| EP 1750018 | A2 | 07-02-2007 | JP | 2007130747 A | 31-05-2007 |
| US 2007031639 | A1 | 08-02-2007 | EP | 1951518 A2 | 06-08-2008 |
| | | | JP | 2009509794 T | 12-03-2009 |
| | | | WO | 2008036074 A2 | 27-03-2008 |
| US 2007028588 | A1 | 08-02-2007 | EP | 1913325 A1 | 23-04-2008 |
| | | | JP | 2009503432 T | 29-01-2009 |
| | | | WO | 2007019362 A1 | 15-02-2007 |
| EP 0246914 | A1 | 25-11-1987 | DE | 3762219 D1 | 17-05-1990 |
| WO 02094497 | A2 | 28-11-2002 | AT | 415234 T | 15-12-2008 |
| | | | BR | 0209427 A | 03-08-2004 |
| | | | CA | 2445644 A1 | 28-11-2002 |
| | | | CN | 1638909 A | 13-07-2005 |
| | | | DK | 1387734 T3 | 09-03-2009 |
| | | | EP | 1387734 A2 | 11-02-2004 |
| | | | ES | 2316561 T3 | 16-04-2009 |
| | | | GB | 2375728 A | 27-11-2002 |
| | | | JP | 4363039 B2 | 11-11-2009 |
| | | | JP | 2004520942 T | 15-07-2004 |
| | | | NO | 20035106 A | 17-11-2003 |
| | | | TW | 572803 B | 21-01-2004 |
| | | | UA | 75144 C2 | 16-02-2004 |
| | | | US | 2003006217 A1 | 09-01-2003 |
| | | | ZA | 200203966 A | 19-05-2003 |
| WO 2004028731 | A1 | 08-04-2004 | AT | 486682 T | 15-11-2010 |
| | | | AU | 2003264749 A1 | 19-04-2004 |
| | | | BR | 0313903 A | 19-07-2005 |
| | | | CA | 2499060 A1 | 08-04-2004 |
| | | | CN | 1684790 A | 19-10-2005 |
| | | | DK | 1551590 T3 | 07-02-2011 |
| | | | EP | 1551590 A1 | 13-07-2005 |
| | | | JP | 4407515 B2 | 03-02-2010 |
| | | | JP | 2006501070 T | 12-01-2006 |
| | | | KR | 20050049504 A | 25-05-2005 |
| | | | RU | 2295429 C2 | 20-03-2007 |
| | | | US | 2006163222 A1 | 27-07-2006 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008145528 A
- WO 02094497 A
- WO 2004028731 A
- WO 2007060387 A
- EP 1957563 A